Europäisches Patentamt

European Patent Office

Office européen des brevets

(19)

(11) Numéro de publication: **0 298 842**
**A1**

(12) **DEMANDE DE BREVET EUROPEEN**

(21) Numéro de dépôt: 88401702.1

(22) Date de dépôt: 01.07.88

(51) Int. Cl.⁴: **C 22 B 59/00**
C 01 F 17/00
// C22B3/00

(30) Priorité: 10.07.87 FR 8709795

(43) Date de publication de la demande:
11.01.89 Bulletin 89/02

(84) Etats contractants désignés:
AT BE CH DE ES FR GB GR IT LI LU NL SE

(71) Demandeur: RHONE-POULENC CHIMIE
25, quai Paul Doumer
F-92408 Courbevoie Cédex (FR)

(72) Inventeur: LEVEQUE, Alain
18, rue du Général Guillaumat
F-17000 La Rochelle (FR)

(74) Mandataire: Dutruc-Rosset, Marie-Claude et al
RHONE-POULENC INTERSERVICES Service Brevets
Chimie 25, Quai Paul Doumer
F-92408 Courbevoie Cédex (FR)

(54) Procédé de séparation des terres rares par extraction liquide-liquide mettant en oeuvre des diluants du type fluorés.

(57) L'invention concerne un procédé de séparation des terres rares par extraction liquide-liquide.

Selon ce procédé on utilise comme agent d'extraction une phase organique comprenant un acide organophosphorique et un diluant fluoré.

EP 0 298 842 A1

Bundesdruckerei Berlin

# Description

## PROCEDE DE SEPARATION DES TERRES RARES PAR EXTRACTION LIQUIDE-LIQUIDE METTANT EN OEUVRE DES DILUANTS DU TYPE FLUORES

La présente invention concerne un procédé de séparation des terres rares par extraction liquide-liquide.

On sait que la séparation des terres rares par extraction liquide-liquide peut être réalisée de façon très efficace par les acides organophosphoriques.

Cette séparation se fait par mise en contact d'une solution aqueuse contenant les terres rares avec une phase organique comprenant comme extractant un acide organophosphorique. Ce type d'acide est très sélectif et on obtient ainsi d'excellentes séparations en mettant en oeuvre un nombre relativement faible d'étages théoriques d'extraction à contre-courant.

Toutefois, un problème peut se poser pour la réextraction à partir de la phase organique des terres rares extraites. Cette réextraction se fait avec des solutions d'acides tels que l'acide chlorhydrique, l'acide nitrique par exemple. Or, les acides organophosphoriques sont des agents d'extraction acides forts. De plus dans les procédés industriels ils sont utilisés dilués dans les hydrocarbures paraffiniques de type kérosène. Dans ces conditions, la réextraction nécessite des consommations d'acides forts concentrés d'autant plus importantes que le rendement de récupération souhaité des terres rares est élevé.

Ceci implique des coûts en réactifs importants qui peuvent rendre mois intéressants les procédés d'extraction liquide-liquide d'un point de vue économique.

L'objet de l'invention est donc de trouver une composition de solvant et notamment un diluant pouvant faciliter la réextraction.

Dans ce but le procédé de séparation des terres rares par extraction liquide-liquide selon l'invention est du type comportant une mise en contact d'une solution aqueuse initiale chargée en au moins une terre rare avec une phase organique initiale comprenant un extractant choisi dans le groupe des acides organophosphoriques et au moins un diluant ; une séparation d'une phase aqueuse et d'une phase organique ; une réextraction de la ou des terres rares de la phase organique par mise en contact avec une solution aqueuse acide ; et il est caractérisé en ce qu'on utilise au moins un diluant fluoré.

L'emploi des diluants de l'invention abaisse d'une manière très nette la consommation en acide pour la réextraction ou permet à conditions égales d'augmenter le rendement de récupération des terres rares.

D'autres caractéristiques et avantages de l'invention seront mieux compris à a lecture de la description et des exemples concrets mais non limitatifs qui vont suivre.

La phase organique initiale selon l'invention comporte tout d'abord un agent extractant qui est choisi dans le groupe des acides organophosphoriques c'est-à-dire les composés de formule $(R_1O)$ $(R_2O)$ PO(OH) dans laquelle $R_1$ et $R_2$ peuvent être identiques ou différents et sont des radicaux alkyles, alicycliques, alcényles, alcynyles, alcoxy-alkyles linéaires ou ramifiés, aryles, alkylaryles, arylalkyles.

On peut citer plus particulièrement ceux pour lesquels $R_1$ et $R_2$ sont des radicaux alkyles et notamment l'acide bis(éthyl-2 hexyl)phosphorique, l'acide bis(paraoctylphényl)phosphorique.

Selon la caractéristique principale de l'invention la phase organique comprend au moins un diluant fluoré. Celui-ci peut être notamment choisi dans le groupe des hydrocarbures fluorés.

On peut mentionner particulièrement les hydrocarbures aliphatiques, alicycliques, benzéniques fluorés et notamment les hydrocarbures aliphatiques saturés et éthyléniques fluorés.

A titre d'exemple on pourra citer le dibromodifluoroéthane, les dérivés fluorés du cumène, du diéthylbenzène, du-p-éthyltoluène.

On peut mentionner aussi les composés vendus sous la marque FLUGENE notamment le trichlorotrifluoroéthane, le difluorotétrachloroéthane (FLUGENE112).

Bien entendu les diluants qui ont été décrits ci-dessus peuvent être utilisés seuls ou en mélange. D'autre part la proportion dans la phase organique de diluants selon l'invention représente généralement entre environ 30 et 95 % en volume de cette phase. Par ailleurs, dans certains cas pour améliorer l'hydrodynamique du système il peut être intéressant d'ajouter un hydrocarbure du type habituellement utilisé. On peut envisager une teneur en hydrocarbure allant jusqu'à 30 % de la phase organique sans perturber l'action des diluants selon l'invention.

La solution aqueuse initiale peut être de toute nature. Elle comprend une ou plusieurs terres rares généralement sous forme chlorure ou nitrate.

Tout ce qui concerne la mise en contact des phases ne fait pas partie de l'invention. On rappellera que cette mise en contact peut se faire dans un appareillage du type mélangeur-décanteur ou colonne, de préférence en continu et à contre-courant sur plusieurs étages.

La température pour cette opération n'est pas critique et elle est généralement située entre l'ambiante et 80°C environ.

La réextraction se fait elle aussi d'une manière en soi connue dans des appareils du même type que ceux mentionnés ci-dessus.

On utilise pour réextraire les terres rares une solution aqueuse acide qui grâce au procédé de l'invention peut être nettement moins concentrée.

Des exemples concrets vont maintenant être donnés.

## EXEMPLE 1 COMPARATIF

On met en contact 1 l de solution aqueuse de chlorure de néodyme à 89,8 g/l d'oxide et 1 l de phase organique constituée d'acide bis (éthyl-2 hexyl) phosphorique (HDEHP) à 1 M/l et de kérosène et on agite à la température ambiante.

Après séparation des phases on récupère une phase organique contenant 16,2 g d'oxyde de néodyme.

La totalité de cette phase organique est mise de nouveau en contact avec de l'acide chlorhydrique 0,5 M et après séparation des phases on recueille une solution contenant 10,8 g/l d'oxyde de néodyme ce qui représente un rendement de récupération à partir de la phase organique de 67 %.

EXEMPLE 2

On met en contact 1 l de solution aqueuse de l'exemple 1 avec 1 l de phase organique constituée d'HDEHP 1M et de FLUGENE 112 dans les mêmes conditions que dans l'exemple 1.

La phase organique récupérée contient 11,6 g/l d'oxyde de néodyme.

Après mise en contact dans les mêmes conditions que l'exemple 1 avec de l'acide chlorhydrique 0,5 M, on récupère après séparation des phases une phase aqueuse contenant 8,9 g/l d'oxyde de néodyme ce qui représente un rendement de récupération de 89 %.

Bien entendu, l'invention n'est nullement limitée aux modes de réalisation décrits qui n'ont été donnés qu'à titre d'exemples. En particulier, elle comprend tous les moyens constituant des équivalents techniques de moyens décrits ainsi que leurs combinaisons si celles-ci sont mises en oeuvre dans le cadre de la protection comme revendiquée.

**Revendications**

1. Procédé de séparation des terres rares par extraction liquide-liquide du type comportant une mise en contact d'une solution aqueuse initiale chargée en au moins une terre rare avec une phase organique initiale comprenant un extractant choisi dans le groupe des acides organophosphoriques et au moins un diluant ; une séparation d'une phase aqueuse et d'une phase organique ; une réextraction de la ou des terres rares de la phase organique par mise en contact avec une solution aqueuse acide ; caractérisé en ce qu'en vue d'améliorer la réextraction, on utilise au moins un diluant fluoré.

2. Procédé selon la revendication 1 caractérisé en ce que le diluant est choisi dans le groupe des hydrocarbures fluorés et notamment des hydrocarbures aliphatiques, alicycliques, éthyléniques, benzéniques fluorés.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | BE-A- 558 856 (U.S. ATOMIC ENERGY COMMISSION) <br> * Résumé; pages 6-8 * <br> --- | 1,2 | C 22 B 59/00 <br> C 01 F 17/00 // <br> C 22 B 3/00 |
| X | EP-A-0 021 990 (RHONE-POULENC INDUSTRIES) <br> * Revendications; page 12 * <br> --- | 1,2 | |
| A | US-A-4 016 237 (G.W. MASON) <br> --- | | |
| A | US-A-3 812 232 (D.J. BAUER) <br> --- | | |
| A | US-A-3 047 601 (O. JOHNSON) <br> ----- | | |

DOMAINES TECHNIQUES
RECHERCHES (Int. Cl.4)

C 22 B
C 01 F

Le présent rapport a été établi pour toutes les revendications

| Lieu de la recherche | Date d'achèvement de la recherche | Examinateur |
|---|---|---|
| LA HAYE | 22-08-1988 | JACOBS J.J.E.G. |

EPO FORM 1503 03.82 (P0402)